# EUROPEAN PATENT APPLICATION

(11) **EP 4 427 602 A1**
(43) Date of publication of application: **11.09.2024**
(21) Application number: 24162204.2
(22) Date of filing: 07.03.2024
(51) Int. Cl.: A23L 17/10, A23L 17/60, A23F 3/14, A23P 20/20

(54) **SHEET-SHAPED FOOD PRODUCT**

(30) Priority: 08.03.2023 JP 2023035521
(71) Applicant: Tanaka Foods Co., Ltd, Hiroshima City, 733-0032 (JP)
(72) Inventor: TANAKA, Shigeki, Hiroshima City, 733-0032 (JP); FUJINAKA, Yoshiharu, Hiroshima City, 733-0032 (JP); NISHIMOTO, Fumio, Hiroshima City, 733-0032 (JP)
(74) Representative: HGF

(57) **Abstract**

To provide a sheet-shaped food product which can retain properties and flavor of a raw food material, and has high flexibility. A sheet-shaped food product having a laminate structure in which two sheets each comprising a raw food material and a binding agent and substantially comprising no moisture retention agent are overlapped with each other and integrally formed, both two sheets having irregularities on an overlapping surface, wherein voids are formed between the overlapping surfaces of the two sheets correspondingly to each irregular shape, a mass ratio (WA/WT) of a dry mass (WA) of the raw food material to a total dry mass (WT) of the sheet-shaped food product is 85% or more, a mass ratio (WA/WB) of the dry mass (WA) of the raw food material to a dry mass (WB) of the binding agent is 7.4 or more and 13.5 or less, and a moisture content is more than 6.0% by mass and 10.0% by mass or less.

## Description

This application is based on and claims the benefit of priority from Japanese Patent Application No. 2023-035521, filed on 8 March 2023, the content of which is incorporated herein by reference.

### BACKGROUND OF THE INVENTION

### Field of the Invention

The present invention relates to a sheet-shaped food product.

### Related Art

Conventionally, a sheet-shaped food product such as laver has widely been used for Nori-maki (sushi roll), rice ball or the like. However, the sheet-shaped food product is thin and easily breakable. Patent Document 1 discloses a technique in which laver coated with an alginate solution is immersed in a solution containing di- or higher valent cations to form a gel-like film on the surface of laver. By using the technique mentioned in Patent Document 1, it is possible to obtain a sheet-shaped food product which is not easily breakable and is voluminous (thick).

However, like the sheet-shaped food product mentioned in Patent Document 1, when the sheet-shaped food product with a gel-like film formed on the surface is reinforced with a large amount of the gel-like film, it may be easily breakable due to its low flexibility when bended. The sheet-shaped food product with a gel-like film formed thereon also has a problem that it is difficult to feel specific properties and flavor of the material.

Patent Document 1: Japanese Unexamined Patent Application, Publication No. 2004-267151

### SUMMARY OF THE INVENTION

An object of the present invention is to provide a sheet-shaped food product which can retain properties and flavor of the raw food material, and has high flexibility.
[1] A sheet-shaped food product which comprises a raw food material and a binding agent and does not substantially comprise a moisture retention agent, wherein
   the raw food material is formed into a plurality of flakes by cutting,
   the sheet-shaped food product has a laminate structure in which two sheets are overlapped with each other and integrally formed,
   both the two sheets have irregularities on an overlapping surface,
   in the sheet-shaped food product, voids are formed between the overlapping surfaces of the two sheets correspondingly to each irregular shape,
   a mass ratio (WA/WT) of a dry mass (WA) of the raw food material to a total dry mass (WT) of the sheet-shaped food product is 85% or more,
   a mass ratio (WA/WB) of the dry mass (WA) of the raw food material to a dry mass (WB) of the binding agent is 7.4 or more and 13.5 or less, and
   a moisture content of the sheet-shaped food product is more than 6.0% by mass and 10.0% by mass or less.
[2] The sheet-shaped food product according to [1], wherein the mass ratio (WA/WB) of the dry mass (WA) of the raw food material to the dry mass (WB) of the binding agent is 9.0 or more and 11.0 or less.
[3] The sheet-shaped food product according to [1] or [2], wherein, when viewed in a transverse cross-section of the sheet-shaped food product, an area ratio of the voids to the transverse cross-section is 35% or more and 75% or less.
[4] The sheet-shaped food product according to any one of [1] to [3], wherein a maximum length dimension of the flake of the raw food material is 1.0 mm or more.
[5] The sheet-shaped food product according to any one of [1] to [4], wherein the moisture content is 7.0% by mass or more and 9.0% by mass or less.

According to the present invention, it is possible to provide a sheet-shaped food product which can retain properties and flavor of the raw food material, and has high flexibility.

### BRIEF DESCRIPTION OF THE DRAWINGS

FIG. 1 is a cross-sectional view schematically illustrating a laminate structure of a sheet-shaped food product of the present invention;
FIG. 2 is an example of a partial cross-sectional photograph of a sheet-shaped food product of Gyokuro (refined green tea) of the present invention;
FIG. 3 is an example of a partial cross-sectional photograph of a sheet-shaped food product of Chirimenjako (dried young sardines) of the present invention;
FIG. 4 is an example of a partial cross-sectional photograph of a sheet-shaped food product of salmon of the present invention; and
FIG. 5 is a flowchart illustrating one example of a method for producing a sheet-shaped food product of the present invention.

### DETAILED DESCRIPTION OF THE INVENTION

Hereinafter, a sheet-shaped food product will be described using drawings as necessary.

### [Sheet-Shaped Food Product]

The sheet-shaped food product includes a raw food material and a binding agent. The sheet-shaped food product does not substantially include a moisture retention agent. The raw food material is formed into a plurality of flakes by cutting. The sheet-shaped food product has a laminate structure in which two sheets each including the raw food material and the binding agent are overlapped with each other and integrally formed. Both the two sheets have irregularities on an overlapping surface. In the sheet-shaped food product, voids are formed between the overlapping surfaces of the two sheets correspondingly to each irregular shape. A mass ratio (WA/WT) of a dry mass (WA) of the raw food material to a total dry mass (WT) of the sheet-shaped food product is 85% or more. A mass ratio (WA/WB) of the dry mass (WA) of the raw food material to a dry mass (WB) of the binding agent is 7.4 or more and 13.5 or less. A moisture content of the sheet-shaped food product is more than 6.0% by mass and 10.0% by mass or less.

### <Composition of Sheet-Shaped Food Product>

The sheet-shaped food product includes a raw food material and a binding agent. The sheet-shaped food product does not substantially include a moisture retention agent.

### (Raw Food Material)

The sheet-shaped food product includes, as the raw food material, a raw food material which is formed into a plurality of flakes by cutting (hereinafter also referred to as "flake-shaped food material"). The raw food material to be generally used is obtained by adding a seasoning and a coloring agent to the food material as necessary, followed by processing. The seasoning, the coloring agent and the processing method are selected according to the degree of the material texture of the raw food material (original properties and flavor of the food material) and the degree of seasoning of the desired sheet-shaped food product.

By using a flake-shaped food material instead of a fine powdered food material as the raw material, sufficient material texture of the food material (original properties and flavor of the food material) can be obtained when eating.

The shape of the raw food material exerts an influence on the structure of the sheet-shaped food product. When a fine powdered food material is used as the raw food material, the overlapping surface of sheets of the sheet-shaped food has small irregularities. As a result, because of small voids formed between the overlapping surfaces of the sheets correspondingly to each irregular shape, large voids are difficult to form. Meanwhile, when the flake-shaped food material is used as the raw food material, the overlapping surface of the sheet-shaped food product has large irregularities. As a result, large voids are formed between the overlapping surfaces of the sheets correspondingly to each irregular shape. Because of large voids formed between the overlapping surfaces of the sheets in the sheet-shaped food product, the sheet-shaped food product has large apparent volume (thickness dimension), and thus a force due to bending of the sheet-shaped food product can be released into the voids between the sheets. As a result, a sheet-shaped food product having high flexibility can be obtained. Flakes obtained by rolling or slicing the food material to a predetermined thickness in the thickness direction are usually used as the flake-shaped food material.

The size of the flake-shaped food material is not particularly limited. The maximum length in the flake-shaped food material is preferably 1.0 mm or more. This allows for larger irregularities of the overlapping surfaces of the sheets and larger voids between the overlapping surfaces of the sheets. From the viewpoint of further making the irregularities larger and further making the voids larger, the lower limit of the maximum length is more preferably 1.5 mm or more. By making the voids larger, the apparent volume can be made larger and the flexibility can be further improved. The upper limit of the maximum length is preferably 5.0 mm or less from the viewpoint of ease of forming into a sheet. The maximum length is preferably 1.0 mm or more and 5.0 mm or less, and more preferably 1.5 mm or more and 5.0 mm or less. The maximum length of the flake-shaped food material included in the sheet-shaped food product is an average value of the maximum lengths of 20 flake-shaped food materials randomly selected from the raw food material before sheet forming (after the pre-treatment process). Specifically, the maximum length of individual flake-shaped food materials can be measured using a micro gauge or the like.

As mentioned above, a flake-shaped food material obtained by rolling or slicing a food material to a predetermined thickness in the thickness direction is usually used. The thickness of the flake-shaped food material is preferably 100 um or less. Thus, the flexibility of the sheet-shaped food product is improved. By using a flake-shaped food material having a thickness of 100 um or less, a large amount of the flake-shaped food material can be included in the sheet-shaped food product. Therefore, the shape retention property of the sheet-shaped food product is improved. The upper limit of the thickness of the flake-shaped food material is more preferably 80 um or less, and still more preferably 60 um or less, from the viewpoint of improving the shape retention property. Meanwhile, the lower limit is preferably 5 um or more from the viewpoint of maintaining the physical strength and improving the shape retention property. The thickness of the flake-shaped food material can be adjusted by conditions of rolling and conditions of slicing. The thickness of the flake-shaped food material included in the sheet-shaped food product is an average value of the thicknesses of 20 flake-shaped food materials randomly selected from the raw food material before sheet forming (after the pre-treatment process). Specifically, the thickness of individual flake-shaped food materials can be measured using a micro gauge or the like. The thickness of the flake-shaped food material is preferably 5 um or more and 100 um or less, more preferably 5 um or more and 80 um or less, and still more preferably 5 um or more and 60 um or less.

There is no particular limitation on the type of food materials included in the raw food material of the sheet-shaped food product. Examples of the food material include vegetables, fishes and shellfishes, seaweeds, tea leaves, beans and the like. These food materials are selected correspondingly to the intended use of the sheet-shaped food product.

There is no particular limitation on the type of vegetables used as the food material. Examples of the vegetables include leaf vegetables, root vegetables and the like. There is no particular limitation on leaf vegetables. Examples of the leaf vegetables include perilla, young radish, spinach, Japanese mustard spinach, coleseed green, leaf mustard, hiroshimana, Chinese cabbage, potherb mustard, cabbage, angelica keiseki, bok choy, basil, Jew's mallow and the like. There is no particular limitation on root vegetables. Examples of the root vegetables include ginseng, turnip, burdock, potato, sweet potato, taro, yam, lotus root, ginger and the like.

There is no particular limitation on the type of fishes and shellfishes to be used as the food material. Examples of the fishes and shellfishes include small fish, shrimp, shucked fishes and shellfishes, fish roe and the like. There is no particular limitation on the type of the small fish. Examples of the small fish include dried young sardines (whitebait) and the like. The dried young sardines are food products including fry such as anchovy. There is no particular limitation on the type of the shrimp. Examples of the shrimp include Ami shrimp and the like. There is no particular limitation on the type of the fishes and shellfishes to be processed into shucked fishes and shellfishes. Examples of the fishes and shellfishes that are processed into shucked fishes and shellfishes include salmon, skipjack tuna, snapper, tuna, mackerel, cod, Japanese horse mackerel, sardine, squid, shrimp, crab, scallop, clam, oyster, sea urchin and the like. There is no particular limitation on the type of the fish roe. Examples of the fish roe include cod roe and the like.

There is no particular limitation on the type of seaweeds to be used as the food material. Examples of the seaweeds include wakame (brown seaweed), hijiki, kelp, wakame leaves, red Meristotheca papulosa, green Meristotheca papulosa, funori, red algae seaweed, sea lettuce and the like. Of these, wakame, hijiki, kelp, wakame leaves, red Meristotheca papulosa, green Meristotheca papulose and funori are preferable.

There is no particular limitation on the type of tea leaves to be used as the food material. Examples of the tea leaves include Gyokuro (refined green tea), green tea, Sencha green tea, Tencha (powdered green tea), black tea and the like.

Examples of the seasoning to be included in the raw food material include salt, sugar, glucose, lactose, soy sauce, sweet sake, brewed vinegar, miso paste, stock (kelp, skipjack tuna, shiitake mushroom), extract of fishes and shellfishes, citric acid, malic acid, sodium glutamate and the like. Furthermore, examples of the coloring agent included in the raw food material include carotene pigment, red koji pigment, paprika pigment, gardenia pigment and the like. These seasonings and coloring agents are selected correspondingly to the intended use of the sheet-shaped food product and the food material to be used.

Too much seasoning and coloring agent in the raw food material makes it difficult to feel the material texture of the food material (original properties and flavor of the food material). Therefore, the mass ratio {(WA₂+WA₃)/WA₁} of the total (WA₂+WA₃) of the dry mass (WA₂) of the seasoning and the dry mass (WA₃) of the coloring agent to the dry mass (WA₁) of the flake-shaped food material in the raw food material is preferably 1.0 or less, and more preferably 0.9 or less.

The mass ratio (WA/WT) of the dry mass (WA) of the raw food material to a total dry mass (WT) of the sheet-shaped food product is 85% or more. By using the flake-shaped food material as the raw food material and the ratio of the dry mass of the raw food material being 85% or more, it is possible to obtain a sheet-shaped food product with excellent material texture of the food material (original properties and flavor of the food material). The ratio (WA/WT) of the dry mass of the raw food material is more preferably 88% or more from the viewpoint of more improving the material texture of the food material (original properties and flavor of the food material). From the viewpoint of blending a binding agent enough to impart shape retention property to the sheet-shaped food product, the ratio of the dry mass of the raw food material is preferably 94% or less. Here, the term "shape retention property" means performance to maintain the structure as the sheet-shaped food product. The mass ratio (WA/WT) is preferably 85% or more and 94% or less, and more preferably 88% or more and 94% or less.

### (Binding Agent)

The binding agent is used to enhance the shape retention property of the sheet-shaped food product. The binding agent is not particularly limited. For example, the binding agent containing polysaccharides is used. Examples of the binding agent containing polysaccharides include konjac (for example, konjac powder, manufactured by Shimizu Chemical Corporation), pectin (for example, PECTIN HR-450, manufactured by Organo Food Tech Corporation), tamarind gum (for example, GLYROID 3S, manufactured by Sumitomo Dainippon Pharma Co., Ltd.), agar, carrageenan, alginic acid, guar gum, xanthan gum and the like. These binding agents can be used alone or in combination of two or more thereof.

The mass ratio (WA/WB) of the dry mass of the raw food material (WA) to the dry mass (WB) of the binding agent is 7.4 or more and 13.5 or less. If the mass ratio (WA/WB) exceeds 13.5, the binding agent is insufficient so that it becomes difficult to secure the shape retention property as the sheet-shaped food product. If the shape retention property is insufficient, it is difficult to retain the structure having voids on the overlapping surface of the sheet. As a result, sufficient flexibility cannot be obtained. Small mass ratio (WA/WB) means high content of the binding agent in the sheet-shaped food product. In the case of high content of the binding agent in the sheet-shaped food product, the swollen binding agent forms a gel-like network structure when the binding agent is mixed. As a result, the mass of the raw food material included per predetermined volume in the sheet-shaped food product decreases. In this case, the gel-shaped binding agent undergoes drying shrinkage in the subsequent forming process. This results in formation of a sheet-shaped food product with many gaps in the surface layer. If the mass ratio (WA/WB) is less than 7.4, the material texture of the food material (original properties and flavor of the food material) of the sheet-shaped food product significantly deteriorates.

The mass ratio (WA/WB) is preferably 9.0 or more and 11.0 or less from the viewpoint of satisfying the maintenance of the shape retention property of the sheet-shaped food product, the flexibility of the sheet-shaped food product, and the material texture of the food material (original properties and flavor of the food material) of the sheet-shaped food product with good balance.

The dry mass is the mass in which the moisture content of the object to be measured is removed from the mass of the raw food material or binding agent included in the sheet-shaped food product (total mass of the object to be measured). The moisture content of the object to be measured is measured by the method mentioned in Analytical Manual of The Standard Tables of Food Composition in Japan -2015- (7th Revision). Specifically, the moisture content of the object to be measured can be measured using Heat Drying Type Moisture Meter MX-50 (manufactured by A&D Company, Limited).

### (Moisture Retention Agent)

The sheet-shaped food product does not substantially include a moisture retention agent. As a result, it is possible to suppress deterioration of the material texture of the food material (original properties and flavor of the food material) due to the flavor (for example, sweetness, etc.) of the moisture retention agent. The moisture retention agent is a moisture retention agent which is generally used in the food technical field. Examples of the moisture retention agent include reduced sugar syrup (for example, AMAMIN 500MC, manufactured by MC Food Specialties Inc.), sorbitol (for example, SORBITOL F, manufactured by B Food Science Co., Ltd.), mannitol, maltitol, erythritol and the like.

"Not substantially include" means that the mass ratio (WC/WT) of the dry mass (WC) of the moisture retention agent to the total dry mass (WT) of the sheet-shaped food product is 1% or less. From the viewpoint of improving the material texture of the food material, WC/WT is preferably 0.1% or less, and more preferably 0.0% (moisture retention agent is not included).

### (Moisture Content)

The moisture content in the sheet-shaped food product is more than 6.0% by mass and 10.0% by mass or less. If the moisture content is 6.0% by mass or less, the flexibility of the sheet-shaped food product significantly deteriorates. If the moisture content exceeds 10.0% by mass, the shape retention property of the sheet-shaped food product deteriorates. From the viewpoint of the flexibility of the sheet-shaped food product and the shape retention property of the sheet-shaped food product, the moisture content of the sheet-shaped food product is more preferably 7.0% by mass or more and 9.0% by mass or less.

The moisture content of the sheet-shaped food product can be by the measurement method according to the atmospheric heating drying method mentioned in Analytical Manual of The Standard Tables of Food Composition in Japan -2015- (7th Revision). Specifically, using Heat Drying Type Moisture Meter MX-50 (manufactured by A&D Company, Limited) and 5 g of a sample of the sheet-shaped food product, the moisture content of the sheet-shaped food product can be measured.

### (Other Components)

The sheet-shaped food product can include components other than the above-mentioned raw food material and binding agent. Other components are not particularly limited. Examples of other components include oils, dietary fibers and the like.

### <Structure of Sheet-Shaped Food Product>

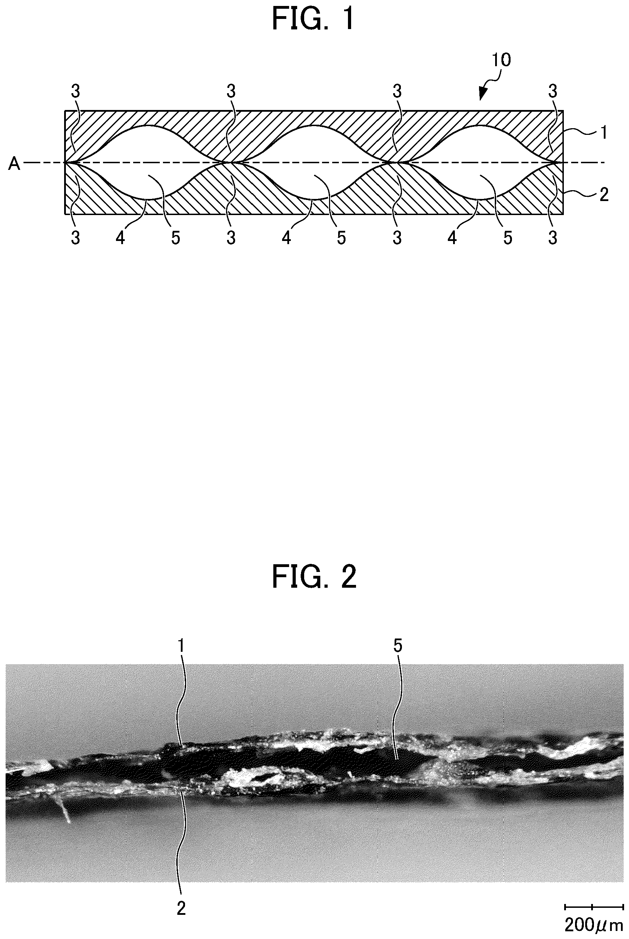

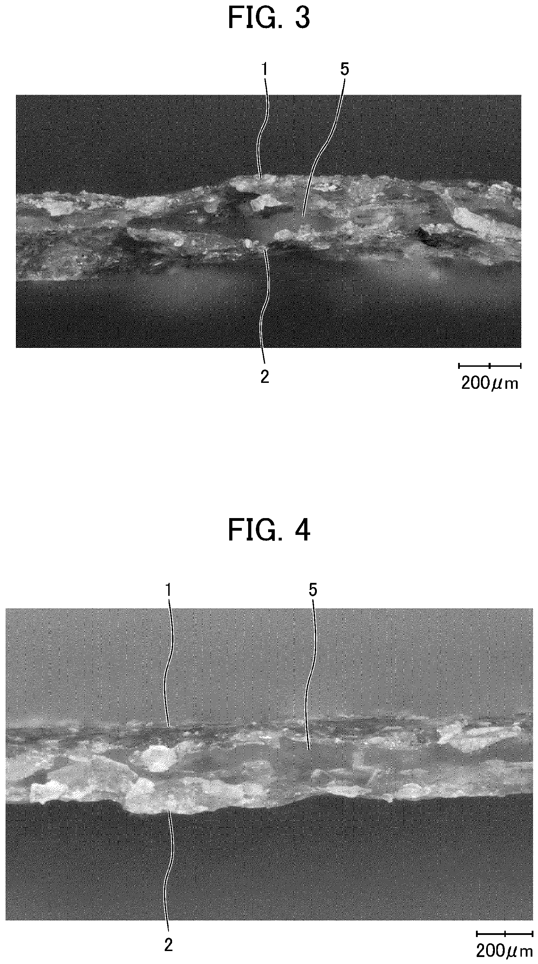

The sheet-shaped food product has an integral laminate structure in which two sheets are overlapped with each other. Each of the two sheets is produced by forming a mixed material including a raw food material and a binding agent into a sheet. Both the two sheets have irregularities on an overlapping surface. In the sheet-shaped food product, voids are formed between the overlapping surfaces of the two sheets correspondingly to each irregular shape. As shown in the schematic cross-sectional view of the sheet-shaped food product of FIG. 1, a sheet-shaped food product 10 has an integral laminate structure in which two sheets (first layer 1, second layer 2) are overlapped with each other. Both two sheets (the first layer 1, the second layer 2) have irregularities (protrusions 3, recesses 4) on the overlapping surface. As shown in FIG. 1, when the surface having irregularities of the first layer 1 and the surface having irregularities of the second layer 2 are overlapped with each other, voids 5 are formed between the overlapping surfaces correspondingly to each irregular shape. As shown in FIG. 1, "voids 5" formed between the overlapping surfaces of the two sheets include not only large voids 5 formed by connecting the first and second layers between the protrusion vertices, but also voids 5 formed which are formed correspondingly to its overlapping structure: voids 5 formed by connecting the first and second layers in a state where the relative positions of protrusion vertices of the first and second layers are misaligned, for example, by connecting the first and second layers between the recess 4 and the protrusion 3, or between the recess 3 and the middle of the protrusion 3 and the recess 4. Each of FIG. 2 to FIG. 4 is an example of a partial cross-sectional photograph of a sheet-shaped food product using each food material. Refined green tea is used as the food material for FIG. 2, dried young sardines are used as the food material for FIG. 3, and salmon is used as the food material for FIG. 4.

When voids corresponding to each irregular shape are formed between the overlapping surfaces of the sheet-shaped food product, the sheet-shaped food product has large apparent volume (thickness dimension), and thus a force due to bending of the sheet-shaped food product can be released into the voids. As a result, it is possible to obtain a sheet-shaped food product with high flexibility.

The thickness of the sheet-shaped food product is preferably 150 um or more and 800 um or less, and more preferably 200 um or more and 600 um or less, from the viewpoint of the volume capable of getting sufficient satisfaction when eating.

The area ratio of the voids to a transverse cross-section of the sheet-shaped food product is preferably 35% or more, and still more preferably 45% or more, from the viewpoint of an improvement in flexibility. From the viewpoint of the shape retention property, the area ratio of the voids to a transverse cross-section of the sheet-shaped food product is preferably 75% or less, and more preferably 65% or less. The area ratio of the voids to a transverse cross-section of the sheet-shaped food product is determined as follows. First, the sheet-shaped food product is cut in five places to obtain a photograph of each transverse cross-section. With respect to the photograph of each transverse cross-section, the area ratio of the voids to the transverse cross-section is calculated by image analysis. An average value of the calculated area ratio of the voids is an area ratio of the voids to the transverse cross-section of the sheet-shaped food product.

### [Method for Producing Sheet-Shaped Food Product]

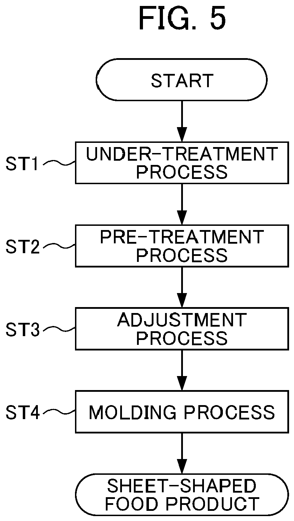

The method for producing a sheet-shaped food product will be described by using FIG. 5. FIG. 5 is a flowchart illustrating one example of the process for producing a sheet-shaped food product. As illustrated in FIG. 5, the process for producing a sheet-shaped food product includes, for example, an under-treatment process ST1, a pre-treatment process ST2, an adjustment process ST3, and a molding process ST4. Furthermore, although it may depend on the type, the freshness or the like of the raw food material, there may be also a case in which the under-treatment process ST1 and the pre-treatment process ST2 are omitted, and the raw food material is directly processed (adjusted, or molded). Hereinafter, the method for producing a sheet-shaped food product will be described, taking the case of using typical food materials, for example, tea leaves, dried young sardines, salmon and leaf vegetables as an example.

### <Under-Treatment Process>

The under-treatment process ST1 is a process which is specific to each food material, and varies depending on the type of food materials. When the food materials are tea leaves such as refined green tea, the under-treatment process ST1 includes an under-treatment process of processing raw tea leaves into tea (raw tea; crude tea; shaping and sorting; roasting; finish tea). Specifically, the under-treatment process includes (1) tea picking, (2) blowing and humidifying, (3) steaming, (4) cooling, (5) leaf beating, (6) rough rolling, (7) rolling, (8) intermidiate rolling, (9) fine rolling, (10) drying, (11) shaping and sorting, (12) roasting, and (13) finish tea.

When the food material is salmon (fishes and shellfishes), the under-treatment process ST1 includes (1) removing heads, gills and guts from salmon, (2) steaming dressed salmon, and (3) process salmon into shucked salmon (removing skin and bones from salmon). Furthermore, shucked salmon may be frozen.

When the food materials are dried young sardines, the under-treatment process ST1 includes (1) washing dried young sardines, (2) boiling dried young sardines, (3) drying dried young sardines, (4) sorting dried young sardines, and (5) cold storage of dried young sardines.

When the food material is young radishes (leaf vegetables), the under-treatment process ST1 includes processes of (1) washing and sterilizing young radishes, (2) cutting the young radishes, (3) blanching the young radishes, (4) seasoning the young radishes with seasonings such as salt and glucose, and (5) drying the young radishes. According to those under-treatments, so-called seasoned dry vegetables can be obtained. Furthermore, instead of the processes (4) and (5), it is possible that the blanched vegetables (young radishes) are directly frozen and preserved to give frozen vegetables, or the blanched vegetables are dehydrated and preserved under freezing to give frozen and salted compressed vegetables. When the food material is ginseng (root vegetables), the under-treatment process ST1 includes the same processes as the case where the food materials are young radishes (leaf vegetables).

### <Pre-Treatment Process>

Pre-treatment process ST2 is a process which is specific to each food material, and varies depending on the type of food materials. When the food materials are tea leaves such as refined green tea, the pre-treatment process ST2 include (1) classifying the dried refined green tea by the under-treatment process ST1 (for example, size of 1 to 3 mm), (2) allowing the classified refined green tea to swell by adding water (for example, two times the amount of water), (3) rolling or slicing the swollen refined green tea, and (4) adding salt, sugar or the like. By the under-treatment process ST1 and the pre-treatment process ST2, refined green tea is processed into flakes with a predetermined size.

When the food material is salmon (fishes and shellfishes), the pre-treatment process ST2 includes (1) rolling or slicing the shucked salmon (fishes and shellfishes), and (2) adding a salmon extract, a seasoning such as salt or sugar, a coloring agent and the like to salmon. By the under-treatment process ST1 and the pre-treatment process ST2, salmon (fishes and shellfishes) is processed into flakes with a predetermined size.

When the food materials are dried young sardines, the pre-treatment process ST2 includes (1) rolling or slicing the dried young sardines, and (2) adding salt, sugar or the like to the dried young sardines. By the under-treatment process ST1 and the pre-treatment process ST2, the dried young sardines are processed into flakes with a predetermined size.

When the food materials are young radishes (leaf vegetables), the pre-treatment process ST2 includes (1) desalting the young radishes dried by the under-treatment process ST1 with water (for example, ten times amount of water), (2) dehydrating young radishes, and (3) rolling or slicing young radishes. When the food material is ginseng (root vegetables), the pre-treatment process ST2 is the same as the pre-treatment process ST2 in case where the food material are young radishes (leaf vegetables). By the under-treatment process ST1 and the pre-treatment process ST2, young radishes (leaf vegetables) or ginseng (root vegetables) are processed into flakes with a predetermined size.

The food material is processed into appropriate size or shape by the above under-treatment process ST1 and pre-treatment process ST2, thus making it possible to produce a sheet-shaped food product 1 with more improved flexibility.

### <Adjustment Process>

The adjustment process ST3 is basically a treatment process which is common irrespective of the type of the food material. In the adjustment process ST3, the binding agent is added to the raw food material. The binding agent is added to the raw food material such that the mass ratio (WA/WB) of the dry mass (WA) of the raw food material to the dry mass of the binding agent (WB) is 7.4 or more and 13.5 or less, followed by mixing of the raw food material and the binding agent.

### <Molding Process>

The molding process ST4 is basically a treatment process that is common irrespective of the type of the food material. For each food material, for example, the below-mentioned heating temperature and rotation speed of a drum may be different. In the molding process ST4, it is possible to obtain a sheet-shaped food product with a moisture content of more than 6.0% by mass and 10% by mass or less by adjusting the drying time on the drum as appropriate.

In the molding process ST4, the raw food material including the binding agent added thereto are first placed in a drum heated to, for example, 110°C or higher. The drum is rotated to form a first layer whose one side is dried. At this stage, the side opposite to a dried side of the first layer is not completely dried and is in a state of having irregularities due to the flake-shaped food materials included therein. Similarly, a second layer whose one side is dried is formed. At this stage, the side opposite to the dried side of the second layer is not completely dried and is in a state of having irregularities due to the flake-shaped food materials included.

Subsequently, the surface having irregularities of the first layer 1 and the surface having irregularities of the second layer 2 are overlapped with each other. As a result, as shown in FIG. 1, voids 5 are formed between the overlapping surfaces correspondingly to each irregular shape (protrusions 3, recesses 4). The laminated sheet-shaped food product is dried by further heating or residual heat of the surface layer, and thus the size of the voids 5 becomes larger. The term "voids" as used herein includes not only large layered voids formed between overlapping surfaces by connecting a small number of irregularities, but also voids formed between irregularities between overlapping surfaces by connecting a large number of irregularities.

These processes make it possible to produce a sheet-shaped food product having an integral laminate structure in which two sheets formed from a mixed material including a raw food material and a binding agent are overlapped with each other. Both two sheets have irregularities on an overlapping surface. In the sheet-shaped food product, voids are formed between the overlapping surfaces of two sheets correspondingly to each irregular shape of two sheets. The sheet-shaped food product may also be produced by the method other than the above-mentioned production method. By using, for example, a plurality of drums, it is also possible to integrally form a sheet-shaped food product having an integral laminate structure with voids formed by overlapping two sheets.

### <Seasoning Process>

The sheet-shaped food product produced in the molding process ST4 may be further seasoned in the seasoning process. In the seasoning process, it is possible to use a seasoning liquid and/or a powder seasoning. In the seasoning process, for example, the sheet-shaped food product can be seasoned by the method of placing the sheet-shaped food product in a rotary mixer and spraying a seasoning liquid while rotating the mixer to coat the surface of the sheet-shaped food product with the seasoning liquid, or the method of adhering a powder seasoning to the sheet-shaped food product.

While embodiments of the present invention have been described, the present invention is not limited to the above embodiments, but may include all aspects included in the concept and claims of the present invention, and various changes and modifications can be made within the scope of the present invention.

### EXAMPLES

Hereinafter, the present invention will be described by way of Examples and Comparative Examples. The present invention is not limited to these Examples.

### 1. Experiment 1: Production and Evaluation of Sheet-Shaped Food Product

Sheet-shaped food products of Examples 1 to 5 and Comparative Examples 1 to 5 were produced by the following procedure and then evaluated. The moisture content is indicated by the value measured by Heat Drying Type Moisture Meter MX-50 (manufactured by A&D Company, Limited) using samples of the sheet-shaped food products thus produced.

### (Examples 1 to 4)

In Examples 1 to 4, tea leaves (Gyokuro) subjected to an under-treatment in the same manner as in the above production method was used as the raw material. Subsequently, Gyokuro (refined green tea) was classified in the same manner as in the above pre-treatment process, and then Gyokuro (refined green tea) was rolled. The rolled Gyokuro (refined green tea) was seasoned to obtain a flake-shaped food material mentioned in Table 1. The flake-shaped food material thus obtained was used in the adjustment process.

Subsequently, the rolled and seasoned Gyokuro (refined green tea) was used as the raw food material in the adjustment process to produce a sheet-shaped food product. Specifically, a binding agent was added to the flake-shaped food materials so that the mass ratio (WA/WB) of the dry mass became the mass ratio shown in Table 1, followed by mixing the binding agent and the flake-shaped food materials. Thereafter, the molding process was performed in the same manner as in the above production method, and the mixture of the binding agent and the flake-shaped food materials were formed into sheets to produce sheet-shaped food products of Examples 1 to 4.

### (Comparative Examples 1 to 3)

Using the materials shown in Table 1, sheet-shaped food products of Comparative Examples 1 to 3 shown in Table 1 were produced by the same production method as in Examples 1 to 4.

### (Example 5 and Comparative Example 4)

A sheet-shaped food product of Example 5 was produced by the same production method as in Examples 1 to 4, except that 5% by mass of dietary fibers were used based on the total dry mass of the sheet-shaped food product in Example 5. A sheet-shaped food product of Comparative Example 4 was produced by the same production method as in Examples 1 to 4, except that 8% by mass of dietary fibers were used based on the total dry mass of the sheet-shaped food product in Comparative Example 4.

### (Comparative Example 5)

Using the materials shown in Table 1, a single-layered sheet-shaped food product of Comparative Example 5 was produced by the same production method as in Examples 1 to 4, except for the molding process. In Comparative Example 5, both sides of one sheet were dried without laminating two sheets in the molding process.

### <Evaluation Method>

The sheet-shaped food products of Examples 1 to 5 and Comparative Examples 1 to 5 were evaluated by the following method. The evaluation results are shown in Table 1.

### [1] Evaluation of Flexibility

Sheet-shaped food products of Examples and Comparative Examples were used as samples for evaluation of the flexibility. With respect to each of Examples and Comparative Examples, 10 samples were wrapped around the circumference of three types of test cylinders of 10 cm, 5 cm or 3 cm in diameter, respectively, and then each sample was checked for cracks caused by wrapping. The flexibility of the sheet-shaped food product was evaluated according to the following evaluation criteria. The diameter of 5 cm corresponds to the diameter of ordinary thick sushi roll (sushi roll). If there are no cracks in the sheet-shaped food product wrapped around a cylinder of 5 cm in diameter, the sheet-shaped food product can be judged to have favorable flexibility suited for wrapping ordinary food products such as sushi roll and rice ball.

### (Evaluation Criteria)

5: No cracks were observed in all 10 samples for all the three types of test cylinders of 10 cm, 5 cm and 3 cm in diameter.
4: No cracks were observed in all 10 samples for the test cylinder of 10 cm or 5 cm in diameter, while cracks were observed in one or more and three or less samples for the test cylinder of 3 cm in diameter.
3: No cracks were observed in all 10 samples for the test cylinder of 10 cm or 5 cm in diameter, while cracks were observed in 4 or more and 10 or less samples for the test cylinder of 3 cm in diameter.
2: No cracks were observed in all 10 samples for the test cylinder of 10 cm in diameter, but cracks were observed in one or more samples for both the test cylinders of 5 cm and 3 cm in diameter.
1: Cracks were observed in one or more samples for the test cylinder of 10 cm in diameter.

### [2] Evaluation of Material Texture of Food Material (Original Properties and Flavor of Food Material)

The sheet-shaped food products of Examples and Comparative Examples were used as samples for evaluation of the material texture of a food material. The material texture of Gyokuro (refined green tea), dried young sardines or salmon, which is the food material (original properties and flavor of the food material) felt by ten monitors when eating samples was evaluated according to the following evaluation criteria. The average value of the evaluation results of ten monitors, rounded to the first decimal place, is shown in Table 1 as the evaluation results of the material texture of the food material. If the value of the evaluation results of the material texture of the food material (original properties and flavor of the food material) is 3 or more, the monitors can feel sufficient material texture of the food material.

### (Evaluation Criteria)

5: Particularly favorable original properties and flavor of the food material are recognized.
4: Favorable original properties and flavor of the food material are recognized.
3: Sufficient original properties and flavor of the food material are recognized.
2: Poor original properties and flavor of the food material are recognized.
1: Neither original properties nor flavor of the food material are recognized.

### [3] Evaluation of Presence of Absence of Laminate Structure

The sheet-shaped food products of Examples and Comparative Examples were used as samples for evaluation of the presence or absence of the laminate structure. The presence or absence of the integral laminate structure (laminate structure) in which two sheets are overlapped with each other was evaluated by observing the cross-section of each sample by an optical microscope. If the sheet-shaped food product has the laminate structure, it was evaluated as "yes". If the sheet-shaped food product has no laminate structure, it was evaluated as "no".

### [4] Area Ratio of Voids to Transverse Cross-Section

The area ratio of the voids to a transverse cross-section of the sheet-shaped food product is determined as follows. First, the sheet-shaped food product is cut in five places to obtain a photograph of each transverse cross-section. With respect to the photograph of each transverse cross-section, the area ratio of the voids to the transverse cross-section is calculated by image analysis. An average value of the calculated area ratio of the voids is an area ratio of the voids to the transverse cross-section of the sheet-shaped food product.

**[Table 1]**

| | Type of food materials | Shape of flake-shaped food materials | | Composition of sheet-shaped food product | | | Structure of sheet-shaped food product | | | Evaluation of sheet-shaped food product | |
|---|---|---|---|---|---|---|---|---|---|---|---|
| | | Maximum length (mm) | Thickness (µm) | WA/ WB | Ratio of raw food material (%) | Moisture content (% by mass) | Overall thickness (µm) | Presence or absence of laminate structure | Ratio of voids (%) | Flexibility | Material texture |
| Ex. 1 | Gyokuro | 1.5 | 50 | 10.0 | 91 | 8.0 | 400 | Yes | 55 | 5 | 5 |
| Ex. 2 | Gyokuro | 1.5 | 50 | 8.2 | 89 | 8.0 | 400 | Yes | 55 | 5 | 4 |
| Ex. 3 | Gyokuro | 1.5 | 50 | 12.5 | 93 | 8.0 | 400 | Yes | 55 | 4 | 5 |
| Ex. 4 | Gyokuro | 1.5 | 50 | 10.0 | 91 | 6.5 | 400 | Yes | 55 | 3 | 5 |
| Ex. 5 | Gyokuro | 1.5 | 50 | 10.0 | 86 | 8.0 | 400 | Yes | 45 | 4 | 4 |
| Comp. Ex. 1 | Gyokuro | 1.5 | 50 | 7.0 | 88 | 8.0 | 400 | Yes | 55 | 3 | 2 |
| Comp. Ex. 2 | Gyokuro | 1.5 | 50 | 14.0 | 93 | 8.0 | 400 | Yes | 55 | 1 | 4 |
| Comp. Ex. 3 | Gyokuro | 1.5 | 50 | 10.0 | 91 | 5.0 | 400 | Yes | 55 | 2 | 4 |
| Comp. Ex.4 | Gyokuro | 1.5 | 50 | 10.0 | 84 | 8.0 | 400 | Yes | 45 | 4 | 2 |
| Comp. Ex.5 | Gyokuro | 1.5 | 50 | 10.0 | 91 | 8.0 | 130 | No | - | 1 | 1 |

As shown in Table 1, in Examples 1 to 5 in which WA/WB is 7.4 or more and 13.5 or less, WA/WT is 85% or more, the moisture content is more than 6.0% by mass and 10.0% by mass or less, and sheet-shaped food products have a laminated structure, sheet-shaped food products with both favorable material texture of the food material (original properties and flavor of the food material) and flexibility were obtained.

Meanwhile, in Comparative Example 1 in which WA/WB is less than 7.4, a sheet-shaped food product with poor material texture was obtained. In Comparative Example 2 in which WA/WB exceeds 13.5, a sheet-shaped food product with poor flexibility was obtained. The sheet-shaped food of Comparative Example 2 was fragile during handling in the evaluation and exhibited poor shape retention property. In Comparative Example 3 in which the moisture content is 6.0% by mass or less, a sheet-shaped food product with poor flexibility was obtained. In Comparative Example 4 in which WA/WT is 84%, a sheet-shaped food product with poor material texture of the food material (original properties and flavor of the food material) was obtained.

In Comparative Example 5, the volume was not sufficient because of its single-layered structure with no void, and a sheet-shaped food product with significantly poor flexibility was obtained. The sheet-shaped food product of Comparative Example 5 also exhibited poor material texture.

### 2. Experiment 2: Evaluation for Influence of Shape of Flake-Shaped Food Material

Using the flake-shaped food material shown in Table 2 as the raw material, sheet-shaped food products of Examples 6 to 11 were produced by the same production method as in Examples 1 to 4 of Experiment 1. The shape of the flake-shaped food material and the composition of the sheet-shaped food product are shown in Table 2. The sheet-shaped food products thus obtained were evaluated in the same manner as in Examples 1 to 4. The evaluation results are shown in Table 2.

**[Table 2]**

| | Type of food materials | Shape of flake-shaped food materials | | Composition of sheet-shaped food product | | | Structure of sheet-shaped food product | | | Evaluation of sheet-shaped food product | |
|---|---|---|---|---|---|---|---|---|---|---|---|
| | | Maximum length (mm) | Thickness (µm) | WA/ WB | Ratio of raw food material (%) | Moisture content (% by mass) | Overall thickness (µm) | Presence or absence of laminate structure | Ratio of voids (%) | Flexibility | Material texture |
| Ex. 6 | Gyokuro | 1.5 | 30 | 10.0 | 91 | 8.0 | 400 | Yes | 55 | 5 | 5 |
| Ex. 7 | Gyokuro | 1.5 | 150 | 10.0 | 91 | 8.0 | 500 | Yes | 55 | 4 | 5 |
| Ex. 8 | Gyokuro | 1.5 | 200 | 10.0 | 91 | 8.0 | 600 | Yes | 55 | 3 | 5 |
| Ex. 9 | Gyokuro | 2.0 | 50 | 10.0 | 91 | 8.0 | 400 | Yes | 55 | 5 | 5 |
| Ex. 10 | Gyokuro | 1.0 | 50 | 10.0 | 91 | 8.0 | 400 | Yes | 50 | 5 | 4 |
| Ex. 11 | Gyokuro | 0.5 | 50 | 10.0 | 91 | 8.0 | 400 | Yes | 45 | 3 | 4 |

As is apparent from Tables 1 and 2, the ratio of voids increases and thus the flexibility is more improved when the maximum length of the flake-shaped food material is 1.0 mm or more. The flexibility of the flake-shaped food material is also improved when the thickness of the flake-shaped food material is 100 um or less.

### 3. Experiment 3: Evaluation of Sheet-Shaped Food Product made of Other Food Materials (Dried Young Sardines, Salmon)

Specifically, using dried young sardines (mentioned as "Chirimen" in Table 3) and shucked salmon as the raw material, sheet-shaped food products of Examples 12 to 19 shown in Table 3 were produced by the same production method as mentioned above. The resulting sheet-shaped food products of Examples 12 to 19 were evaluated in the same manner as in Experiment 1. The evaluation results are shown in Table 3.

**[Table 3]**

| | Type of food materials | Shape of flake-shaped food materials | | Composition of sheet-shaped food product | | | Structure of sheet-shaped food product | | | Evaluation of sheet-shaped food product | |
|---|---|---|---|---|---|---|---|---|---|---|---|
| | | Maximum length (mm) | Thickness (µm) | WA/ WB | Ratio of raw food material (%) | Moisture content (% by mass) | Overall thickness (µm) | Presence or absence of laminate structure | Ratio of voids (%) | Flexibility | Material texture |
| Ex. 12 | Chirimen | 1.5 | 50 | 10.0 | 91 | 8.0 | 400 | Yes | 52 | 5 | 5 |
| Ex. 13 | Chirimen | 1.5 | 50 | 8.2 | 89 | 8.0 | 400 | Yes | 52 | 5 | 4 |
| Ex. 14 | Chirimen | 1.5 | 50 | 12.5 | 93 | 8.0 | 400 | Yes | 52 | 4 | 5 |
| Ex. 15 | Chirimen | 1.5 | 50 | 10.0 | 91 | 6.5 | 400 | Yes | 52 | 3 | 5 |
| Ex. 16 | Salmon | 1.5 | 50 | 10.0 | 91 | 8.0 | 400 | Yes | 50 | 5 | 5 |
| Ex. 17 | Salmon | 1.5 | 50 | 8.2 | 89 | 8.0 | 400 | Yes | 50 | 5 | 4 |
| Ex. 18 | Salmon | 1.5 | 50 | 12.5 | 93 | 8.0 | 400 | Yes | 50 | 4 | 5 |
| Ex. 19 | Salmon | 1.5 | 50 | 10.0 | 91 | 6.5 | 400 | Yes | 50 | 3 | 5 |

As shown in Table 3, although the ratio of voids varies slightly depending on the physical properties of the food material, in Examples 12 to 19 in which dried young sardines and salmon were used as the food material, WA/WB was 7.4 or more and 13.5 or less, WA/WT was 85% or more, the moisture content was more than 6.0% by mass and 10.0% by mass or less, and sheet-shaped food products with both favorable material texture of the food material (original properties and flavor of food material) and flexibility were obtained.

### EXPLANATION OF REFERENCE NUMERALS

- 1:: FIRST LAYER
- 2:: SECOND LAYER
- 3:: PROTRUSIONS
- 4:: RECESSES
- 5:: VOIDS
- 10:: SHEET-SHAPED FOOD PRODUCT
- A:: OVERLAPPING SURFACE

## Claims

1. A sheet-shaped food product which comprises a raw food material and a binding agent and does not substantially comprise a moisture retention agent, wherein
the raw food material is formed into a plurality of flakes by cutting,
the sheet-shaped food product has a laminate structure in which two sheets are overlapped with each other and integrally formed,
both the two sheets have irregularities on an overlapping surface,
in the sheet-shaped food product, voids are formed between the overlapping surfaces of the two sheets correspondingly to each irregular shape,
a mass ratio (WA/WT) of a dry mass (WA) of the raw food material to a total dry mass (WT) of the sheet-shaped food product is 85% or more,
a mass ratio (WA/WB) of the dry mass (WA) of the raw food material to a dry mass (WB) of the binding agent is 7.4 or more and 13.5 or less, and
a moisture content of the sheet-shaped food product is more than 6.0% by mass and 10.0% by mass or less.

2. The sheet-shaped food product according to claim 1, wherein the mass ratio (WA/WB) of the dry mass (WA) of the raw food material to the dry mass (WB) of the binding agent is 9.0 or more and 11.0 or less.

3. The sheet-shaped food product according to claim 1, wherein, when viewed in a transverse cross-section of the sheet-shaped food product, an area ratio of the voids to the transverse cross-section is 35% or more and 75% or less.

4. The sheet-shaped food product according to claim 1, wherein a maximum length dimension of the flake of the raw food material is 1.0 mm or more.

5. The sheet-shaped food product according to claim 1, wherein the moisture content is 7.0% by mass or more and 9.0% by mass or less.
